# EUROPEAN PATENT SPECIFICATION

(11) **EP 3 718 189 B1**
(45) Date of publication and mention of the grant of the patent: **23.03.2022**
(21) Application number: 17808853.0
(22) Date of filing: 29.11.2017
(51) Int. Cl.: H02J 7/00, H02J 50/10, H04B 5/00, H02J 7/02, H01F 38/14, H02J 7/34

(54) **CHARGING DEVICE AND WEARABLE ARTICLE**
AUFLADEVORRICHTUNG UND WEARABLE-ARTIKEL
DISPOSITIF DE CHARGE ET ARTICLE VESTIMENTAIRE

(43) Date of publication of application: 07.10.2020
(73) Proprietor: KC Textil GmbH, 82515 Wolfratshausen (DE)
(72) Inventor: KUFNER, Dominik, IT-25017 Lonato del Garda (IT); CINEL, Sofia, IT-25017 Lonato del Garda (IT)
(74) Representative: Hoffmann Eitle
(86) International application number: PCT/EP2017/080818
(87) International publication number: WO 2019/105545

(56) References cited:
- US-A1- 2013 257 368
- US-A1- 2016 013 679
- US-A1- 2016 301 236
- US-A1- 2017 170 676

## Description

### Technical field

The invention refers to a charging device for inductive charging of an electronic device, for example a mobile phone, like a smartphone, a tablet computer or the like. Further, the invention refers to a wearable article including a charging device, in particular a clothing article, a bag, preferably a handbag, backpack, suitcase, briefcase or the like.

### Technological background

In recent years, the clothing industry has been challenged to provide technological functions in fashion products. The goal interlinked herewith is to combine esthetics with functionality. One of the aspects refers to charging devices, which are of increasing interest since mobile phones and other electronic devices have a relatively high and increasing power consumption and a limited capacity of the rechargeable battery. Accordingly, the demand for charging devices which are readily available significantly increases. Consumers rely heavily on mobile devices, for example so as to work flexibly, for emergency calls, or the like.

WO 2016/154778 A1 refers to an apparatus for transferring electrical energy in a wearable device. The apparatus includes a conductive fabric to transfer power from a power source to one or more devices, one or more electrical contacts to couple the conductive fabric with the power source, and a power transfer coil which is coupled with the conductive fabric, the one or more electrical contacts, and the power source, to receive power from the power source via the conductive fabric and to supply power to one or more devices. At least one of the conductive fabric, the one or more electrical contacts, or the power transfer coil is at least partially embedded in a portion of a wearable device.

US 2014/0111147 A1 refers to a modular pocket system which includes a modularly mountable pocket modularly mountable to a tactical garment. An insert is mounted in the pocket to align and closely inductively couple a primary inductive coil and related primary drive circuits in the insert to a secondary inductive coil and related secondary charging circuits in a portable electronic device mountable into the insert for the inductively coupled transmission of power between the coils so as to transmit power to the portable device, where the device has a rechargeable energy storage component electrically connected to the secondary inductive coil and secondary charging circuits.

US 2016/0301236 A1 teaches a method and apparatus for wirelessly charging a chargeable device, such as a smart phone, digital music player, or navigation device, using a wireless charger. The wireless charger includes a connector, a retainer, and a wireless power transmitter. The connector is configured to secure the wireless charger to a visor in a passenger compartment of a vehicle.

A wireless charge system including a wireless charger configured to wirelessly transfer power to an apparatus is disclosed in US 2016/0013679 A1.

US 2013/0257368 A1 shows a portable wireless charging system incorporated inside a carrying device.

As a yet further document, US 2017/0170676 A1 refers to a foldable fabric-based packaging solution.

### Summary of the invention

An object of the invention is to provide a consumer-friendly charging device with high functionality and flexible field of application.

The subject-matter of claim 1 provides a corresponding charging device. Further preferred embodiments are mentioned in the dependent claims and/or outlined in the following description.

In particular, the invention provides a charging device for inductive charging of an electronic device, for example a mobile phone, in particular a smartphone, a tablet computer or the like, which charging device includes: a back layer, a front layer joined to the back layer so as to form a pocket for receiving the electronic device, and a charging element arranged to charge the electronic device in the pocket, the charging element being configured for inductive charging of the electronic device. According to the present configuration, the back layer and/or the front layer are elastically deformable.

"Elastically deformable" means that the back layer and/or the front layer has/have elongation capacity and corresponding recovery properties by 10% or more, preferably 15% or more, in particular 20% or more, preferably 30% or more. In a preferred embodiment, the back layer and/or the front layer has/have elongation capacity and corresponding recovery properties of 30-60%, preferably 30-50%. In an embodiment, the back layer and/or the front layer is a fabric, which has elastic properties due to the construction, the yarn composition and/or the fiber composition. The back layer and/or the front layer are elastically deformable to position the electronic device in a centered arrangement.

The inductive charging technology avoids a predetermined interface connecting the electronic device to a particular connector. Since the back layer and/or front layer are elastically deformable, the back layer and/or front layer, and, therefore, the charging device, are/is adaptable to electronic devices having different dimensions. In addition, the electronic device can be safely held by the charging device in a preferred position relative to the charging element.

The elasticity of the front layer and/or back layer allows the charging device to adapt to differently dimensioned electronic devices to be charged. Still, the electronic device is arranged in the charging device in a horizontally centered way, thereby allowing a preferred alignment of the electronic device in relation to the charging element and in particular to the charging coils.

Although the battery can be combined with the inductive coils and circuit boards, it is preferred that the battery is allocated in a second (separate) pocket, thereby making the battery removable. This is in particular useful in case the charging device is implemented in a piece of cloth. Further, increased thickness (battery, circuit board, coils) is avoided.

Optionally, a split cable can be used to further connect other electronic garment functions to the same battery, such as Bluetooth earphones, smart glasses, heating elements or others, which can be placed in further pockets throughout the garment or bag.

A removable battery simplifies disposal and recycling and further provides the possibility to use the battery inside or outside of a piece of cloth/garment, or the like. This reduces waste as the battery can be used after the lifecycle of the piece of cloth.

According to a preferred embodiment, the back layer and/or front layer is formed of a fabric material which preferably comprises elastic synthetic fibers, or an elastic configuration so that the back layer and/or front layer is provided with high strength and elasticity, and good recovery.

Alternatively, the elastic properties of the fabric could be achieved with elastic yarns such as texturized yarns. Depending on the size of the electronic device introduced into the pocket or the charging device, the back layer may be deformed. Due to the reset force provided by the fibers, textile composition or yarn composition of the front layer and/or back layer, the electronic device can be fixed within the pocket of the charging device.

In a preferred embodiment, the fabric material forming the back layer and/or front layer comprises 1-10% of elastic synthetic fibers, more preferably 2-5% of elastic synthetic fibers. Such a configuration provides a well-balanced property of strength and elasticity.

A fabric with an elastic configuration is a material which is elastically deformable for example by using a weaving or knitting technique which allows the fabric to be resiliently expanded. An example of an elastic configuration of the back layer and/or front layer is a jersey knit fabric.

According to the invention, the silver fabric layer is arranged at a side of the charging element opposite to the back layer, or the silver fabric layer is arranged between the charging element and the back layer, wherein the silver fabric layer is preferably attached to the back layer by sewing. The silver fabric layer shields the body of the wearer of the charging device of electromagnetic waves from the charging device. However, since the silver fabric layer is made of a fabric material, the silver fabric layer provides an adaptable portion which does not negatively affect the wearing comfort. A silver material is not harmful, whereas other shielding materials like nickel, copper or aluminum have drawbacks.

The silver layer is useful for shielding electromagnetic waves from the wearer's body, thus channeling them forwards. The silver fabric is light and soft. Thus, the silver fabric allows softer and lighter devices which are more comfortable to wear and, therefore, more suitable for integration in clothing.

By arranging the charging element according to one the embodiments of the invention within the charging device, which is according to an embodiment a pocket, the charging element is safely arranged.

According to a different embodiment, the charging element is attached to the silver fabric layer by gluing, thereby enabling cost-effective manufacturing.

Preferably, the front layer comprises a topstitching pattern, which preferably attaches the front layer to the back layer. The topstitching pattern also indicates how the electronic device can be introduced into the pocket. For example, a colored yarn may be used for the topstitching.

It is preferred that the front layer comprises a transparent seam tape, wherein the topstitching pattern is provided on the seam tape. Thereby, the front layer is reinforced.

According to yet a further modification, the front layer comprises a transparent front layer so that the user can determine whether the electronic device is correctly placed within the pocket of the charging device.

A further embodiment is a front layer comprising a display, like a LED-display, so as to show the charging in progress or the status of the battery.

In another embodiment of the charging device, the charging element comprises a circuit board made of a flexible material, for example a polyimide film. According to this configuration, the charging element is adaptable to the body of the wearer, thereby increasing the wearing comfort.

In a further embodiment, the charging element comprises at least one charging coil, in particular a copper coil, wherein charging coils are preferably arranged in an overlapping manner. For example, two coils may be arranged in a common plane, and a further coil is arranged so as to partially overlap the two coils. Thereby, high energy transfer is provided while providing a structure which may be deformed. A tolerance in the vertical position of the power receiving coil in the device is possible, thereby further allowing for different sizes of devices in the same pocket.

Preferably, the charging element is arranged in the pocket formed by the back layer and the front layer. Thereby, a compact configuration is provided.

According to a further embodiment, the front layer is attached to the back layer by a topstitching. The topstitching pattern makes it possible for garment producers to vary dimension of the charging device, and in particular the pocket, to obtain compatibility with a wide range of device dimensions.

In a further embodiment, the charging element is arranged in a silicone housing. The silicone housing is a water-proof material so that the charging element, the piece of cloth or the like carrying the charging element can be cleaned in a conventional washing machine or a dry-cleaning device. Alternatively, the charging element can be nano-sealed.

Preferably, the charging device comprises a second pocket for accommodating a battery for the charging element. With such a configuration, the battery can be removed from the charging device, whereas the charging element may remain with the charging device. The second pocket for accommodating the rechargeable battery is preferably arranged adjacent to the pocket configured for receiving the electronic device.

The invention further refers to a piece of cloth / clothing or accessory, in particular a jacket, a shirt, a coat, a pair of trousers, handbag, backpack, suitcase, or the like, comprising a charging device according to any of the previous aspects.

### Brief description of the drawings

The invention will be better understood by reference to the following specification taken in conjunction with the accompanying drawings, which illustrate a non-limiting example of a preferred embodiment of the invention.

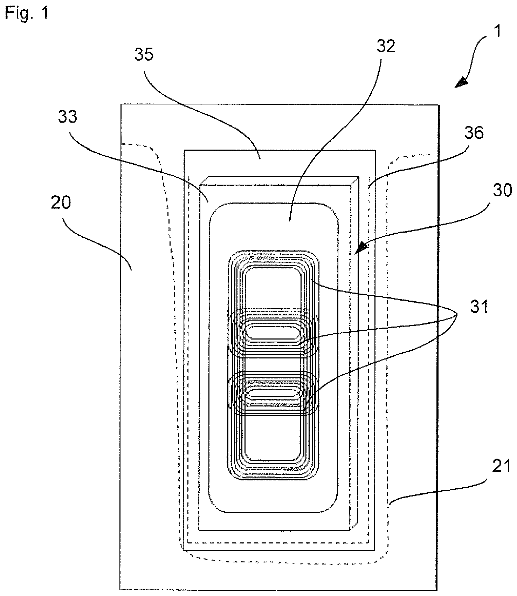

- Fig. 1: is a schematic plan view of an embodiment of the invention referring to a configuration wherein a charging element is covered by a back layer;

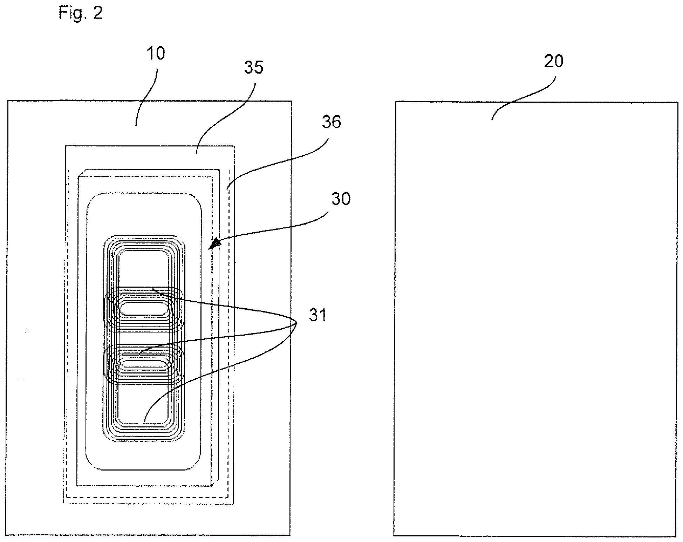

- Fig. 2: is a schematic view of the embodiment shown in Fig. 1, wherein components of the charging device are shown in a disjoint state;
- Fig. 3: is a schematic side view of the embodiment of Fig. 1;
- Fig. 4: is a schematic plan view of a second embodiment of the invention referring to a configuration wherein a charging element is arranged between a back layer and a front layer;
- Fig. 5: is a schematic side view of the embodiment of Fig. 4.

### Detailed description of preferred embodiment

Embodiments of the invention are hereafter described in detail by way of non-limiting examples. Modifications of certain individual features can be combined with other features of the embodiment to provide additional examples of the invention.

The charging device 1 of the first embodiment comprises a back layer 10 made of fabric material, which includes in particular elastic synthetic fibers (for example elastane fibers). In the present embodiment, the fabric material contains 2-5% elastic synthetic fibers so as to provide the back layer 10 with high strength and elasticity. According to this configuration, the back layer 10 can be elastically deformed while being able to return to the original shape.

The charging device 1 further comprises a front layer 20, which is according to the present embodiment made of a similar material as the back layer 10. Consequently, the front layer 20 has similar properties as the back layer 10.

According to a modification of the embodiment, the front layer 20 is made of a transparent synthetic material, for example a transparent foil. Thereby, the portion between the front and back layer is visible through the transparent front layer 20.

The front layer 20 is joined to the back layer 10 by sewing (topstitching 21) or welding in an edge portion of the corresponding elements so that the front layer 20 and the back layer 10 form a pocket which is configured to receive a mobile phone (smartphone). Smartphones are generally designed in a rectangular shape. The dimensions of smartphones, however, vary depending on the size of the screen.

The front layer 20 can be provided with an ultrasonic or heat-bonded transparent reinforcement tape so as to increase the tear resistance. A topstitching (seam) 21 is arranged along the reinforcement tape so as to connect the front layer 20 to the back layer 10. The topstitching 21 also indicates the dimensions of the pocket so that the user recognizes where the smartphone is to be introduced.

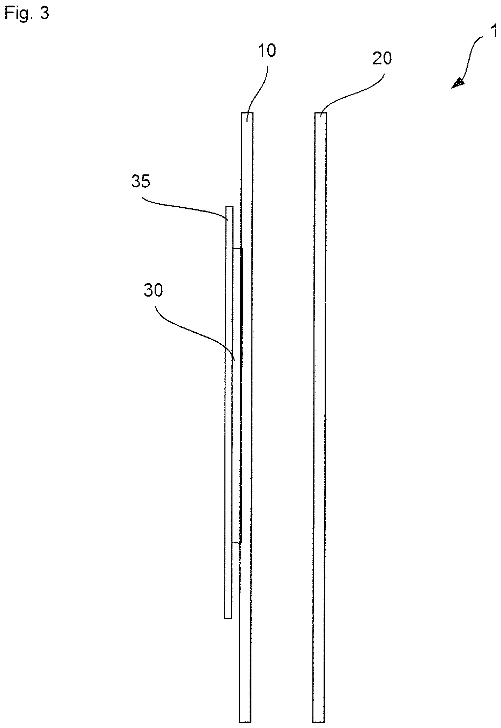

A charging element 30 is arranged at a back side of the back layer 10 in a portion covered by the pocket. As identified in figure 3, a silver fabric 35 containing silver particles or silver fibers is provided at the side of the charging element 30 opposite to the back layer 10 (the side facing the wearer's body). The silver fabric 35 can be joined to the back layer 10 by gluing or sewing, wherein the charging element 30 can be fixed to the silver fabric 35 by gluing or sewing as well. According to the embodiment, the silver fabric 35 is attached to the back layer by sewing (seam 36).

The charging element 30 is arranged within a silicone housing 33, thereby providing a flexible covering. The silicone housing 33 is a water-proof material so that the charging element 30, the piece of cloth or the like carrying the charging element 30 can be cleaned in a conventional washing machine or a dry-cleaning device.

The charging element 30 comprises according to the present embodiment several coils 31. In particular, two coils are arranged next to each other, whereas a third coil is arranged in a state partially overlapping the previously mentioned coils.

The charging element 30 further comprises a circuit board 32. The circuit board 32 can be made of an elastic or flexible material and comprises a control part for controlling the charging operation. In addition, a terminal for connecting the charging element 30 to a battery or accumulator device is connected to the circuit board 32 of the charging element 30. The terminal can be a USB / micro USB-terminal.

For example, the circuit board can be formed of a polyimide film so that the coils 31 can be attached to the circuit board 32 by soldering. If the circuit board 32 is made of a flexible material, the charging element 30 can be arranged in a piece of cloth, for example in the pocket of a jacket or a side portion of a pair of trousers, without negatively affecting the comfort of the wearer.

According to a modification of the embodiment, the circuit board of the charging element is made of a fiber-reinforced composite material, which is in contrast to a circuit board made of a polyimide film relatively stiff. Since the charging element is arranged within a silicone housing which provides a soft and resilient surface, the charging element does not affect the wearer's comfort. Alternatively, the charging element can be provided with a nano sealing.

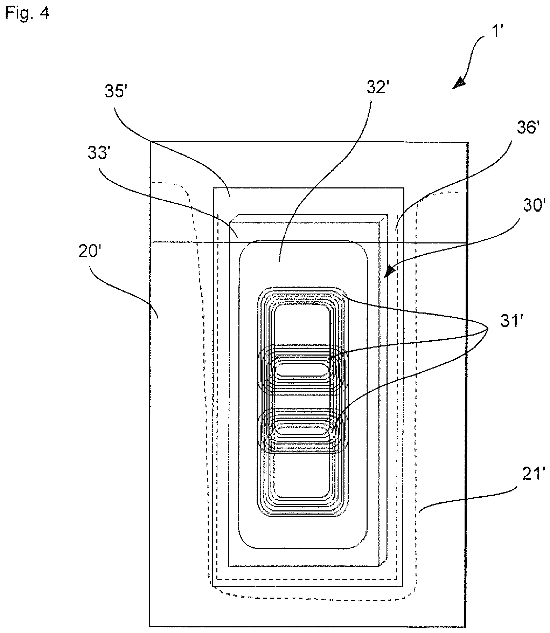

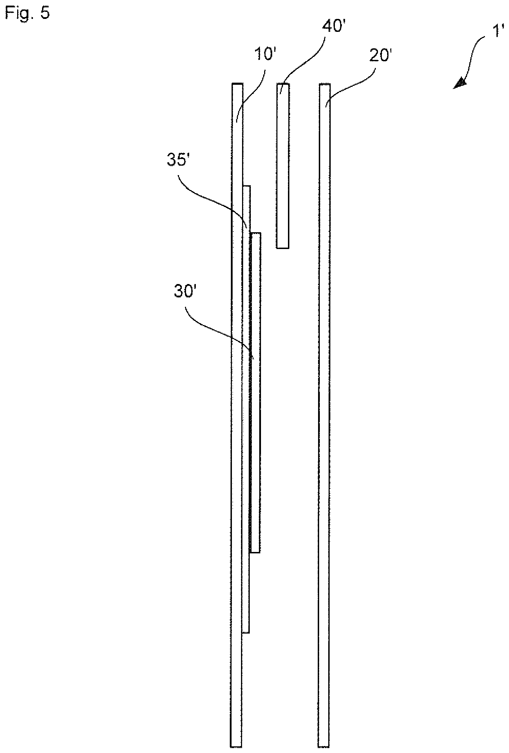

Figs. 4-5 refer to a charging device 1' according to the second embodiment of the present invention, which differs from the first embodiment in that a charging element 30' is arranged between a back layer 10' and a front layer 20'. In other words, the charging element 30' is arranged within the pocket formed by connecting the front layer 20' to the back layer 10' by the topstitching 21'.

Similar to the first embodiment, the charging element 30' comprises one or several coils 31' which can be arranged as in the first embodiment. Further, the charging element 30' comprises a circuit board 32' which is either flexible or stiff. The coils 31' and the circuit board 32' are accommodated within a silicone housing 33' which is water-proof and provides comfort to the wearer.

On a side of the charging element 30' facing the back layer 10', a silver fabric layer 35' is provided, which is attached to the back layer 10' by sewing (seam 36').

On a portion of the back layer/front layer in the area of the opening of the pocket, an intermediate layer 40' is provided, which has, in plan view (Fig. 4), a reduced size as compared to the back layer 10' and the front layer 20'. The intermediate layer 40' has substantially the same width as the front layer 20' and the back layer 10', but extends from the upper edge thereof only partially along the front/back layer.

The back layer 10', the intermediate layer 40' and the front layer 20' are connected by the topstitching 21' which also provides the borders of the pocket.

Since the intermediate layer 40' extends such that a portion thereof partially covers the silver fabric layer 35' and a portion of the charging element 30', the charging element 30' can be held safely within the pocket when a mobile phone is repeatedly extracted from the pocket.

As in the first embodiment, the front layer 20' may be formed of a similar material as the back layer 10'. According to a modification, the front layer 20' is made of a transparent material.

## Claims

1. Charging device (1, 1') for inductive charging of an electronic device, for example a mobile phone, in particular a smartphone, a tablet computer or the like, comprising:
a back layer (10, 10'),
a front layer (20, 20') joined to the back layer (10, 10') so as to form a pocket for receiving the electronic device, and
a charging element (30, 30') arranged to charge the electronic device arranged in the pocket, the charging element (30, 30') being configured for inductive charging of the electronic device,
wherein the back layer (10, 10') and/or the front layer (20, 20') is elastically deformable,
**characterized in that**
a silver fabric layer (35) is arranged at a side of the charging element (30') opposite to the back layer (10), or
a silver fabric layer (35') is arranged between the charging element (30') and the back layer (10').

2. Charging device (1, 1') according to claim 1, **characterized in that** the back layer (10, 10') and/or the front layer (20, 20') is formed of a fabric material,
which fabric material preferably comprises elastic synthetic fibers, in particular 1-10%, more preferably 2-5%, of elastic synthetic fibers,
and/or wherein the fabric material has an elastic textile construction, or composition, such as texturized yarns or elastic fiber content.

3. Charging device (1, 1') according to any of the previous claims, **characterized in that** the front layer (20, 20') is attached to the back layer (10, 10') by a topstitching pattern (21, 21').

4. Charging device (1, 1') according to claim 3, **characterized in that** the front layer (20, 20') is provided with a seam tape, wherein the topstitching pattern (21, 21') is provided on the seam tape.

5. Charging device (1, 1') according to any of the previous claims, wherein the silver fabric layer (35, 35') is attached to the back layer (10, 10') by sewing.

6. Charging device (1, 1') according to claim 5, **characterized in that** the charging element (30) is attached to the silver fabric layer (35) by sewing.

7. Charging device (1, 1') according to any of the previous claims, **characterized in that** the front layer (20, 20') is made of a transparent material or comprises a transparent front portion.

8. Charging device (1, 1') according to any of the previous claims, **characterized in that** the charging element comprises a circuit board (32, 32'), which circuit board (32) is preferably made of an elastically deformable material, in particular polyimide,
or which a circuit board (32, 32') is made of a fiber-reinforced composite material.

9. Charging device (1, 1') according to any of the previous claims, **characterized in that** the front layer comprising a display, like a LED-display.

10. Charging device (1, 1') according to any of the previous claims, **characterized in that** the charging element (30, 30') comprises at least one charging coil (31, 31'), preferably two or more charging coils (31, 31').
wherein it is preferred that the charging element (30, 30') comprises three charging coil (31, 31'), wherein a first and a second charging coil (31, 31') are arranged adjacent each other and the third charging coil (31, 31') is arranged so as to overlap the first and second charging coils (31, 31').

11. Charging device (1, 1') according to any of the previous claims, **characterized by** a second pocket for accommodating a battery for the charging element (30, 30').

12. Charging device (1') according to any of the previous claims, **characterized in that** the charging element (30') is arranged in the pocket formed by the back layer (10') and the front layer (20') or in a portion by the back layer (10) and the front layer (20).

13. Charging device (1, 1') according to any of the previous claims, **characterized in that** the charging element (30, 30') is arranged in a silicone housing (33, 33').

14. Wearable article, in particular a clothing article like a jacket, a shirt, a coat, a pair of trousers, or the like, or a bag, preferably a handbag, backpack, suitcase or briefcase, comprising a charging device according to any of the previous claims.

## Patentansprüche

1. Ladevorrichtung (1, 1') zum induktiven Laden einer elektronischen Vorrichtung, zum Beispiel eines Handys, insbesondere eines Smartphones, eines Tablet-Computers oder dergleichen, umfassend:
eine hintere Lage (10, 10'),
eine vordere Lage (20, 20'), die so mit der hinteren Lage (10, 10') verbunden ist, dass eine Tasche zum Aufnehmen der elektronischen Vorrichtung gebildet wird, und
ein Ladeelement (30, 30'), das angeordnet ist, um die in der Tasche angeordnete elektronische Vorrichtung zu laden, wobei das Ladeelement (30, 30') zum induktiven Laden der elektronischen Vorrichtung ausgelegt ist,
wobei die hintere Lage (10, 10') und/oder die vordere Lage (20, 20') elastisch verformbar ist,
**dadurch gekennzeichnet, dass**
eine Silberstofflage (35) an einer Seite des Ladeelements (30') gegenüber der hinteren Lage (10) angeordnet ist, oder
eine Silberstofflage (35') zwischen dem Ladeelement (30') und der hinteren Lage (10') angeordnet ist.

2. Ladevorrichtung (1, 1') nach Anspruch 1,
**dadurch gekennzeichnet, dass** die hintere Lage (10, 10') und/oder die vordere Lage (20, 20') aus einem Stoffmaterial gebildet ist,
wobei das Stoffmaterial vorzugsweise elastische Kunststofffasern, insbesondere 1-10%, bevorzugter 2-5% elastische Kunststofffasern umfasst,
und/oder wobei das Stoffmaterial einen elastischen Textilaufbau, oder Zusammensetzung, wie etwa strukturierte Garne oder Gehalt an elastischen Fasern aufweist.

3. Ladevorrichtung (1, 1') nach einem der vorstehenden Ansprüche, **dadurch gekennzeichnet, dass** die vordere Lage (20, 20') durch ein abgestepptes Muster (21, 21') an der hinteren Lage (10, 10') angebracht ist.

4. Ladevorrichtung (1, 1') nach Anspruch 3, **dadurch gekennzeichnet, dass** die vordere Lage (20, 20') mit einem Nahtband bereitgestellt ist, wobei das abgesteppte Muster (21, 21') auf dem Nahtband bereitgestellt ist.

5. Ladevorrichtung (1, 1') nach einem der vorstehenden Ansprüche, wobei die Silberstofflage (35, 35') durch Näharbeit an der hinteren Lage (10, 10') angebracht ist.

6. Ladevorrichtung (1, 1') nach Anspruch 5, **dadurch gekennzeichnet, dass** das Ladeelement (30) durch Näharbeit an der Silberstofflage (35) angebracht ist.

7. Ladevorrichtung (1, 1') nach einem der vorstehenden Ansprüche, **dadurch gekennzeichnet, dass** die vordere Lage (20, 20') aus einem durchsichtigen Material hergestellt ist oder einen durchsichtigen vorderen Abschnitt umfasst.

8. Ladevorrichtung (1, 1') nach einem der vorstehenden Ansprüche, **dadurch gekennzeichnet, dass** das Ladeelement eine Leiterplatte (32, 32') umfasst, wobei die Leiterplatte (32) vorzugsweise aus einem elastisch verformbaren Material, insbesondere Polyimid, hergestellt ist, oder wobei die Leiterplatte (32, 32') aus einem faserverstärkten Verbundmaterial hergestellt ist.

9. Ladevorrichtung (1, 1') nach einem der vorstehenden Ansprüche, **dadurch gekennzeichnet, dass** die vordere Lage eine Anzeige, wie eine LED-Anzeige, umfasst.

10. Ladevorrichtung (1, 1') nach einem der vorstehenden Ansprüche, **dadurch gekennzeichnet, dass** das Ladeelement (30, 30') mindestens eine Ladespule (31, 31'), vorzugsweise zwei oder mehr Ladespulen (31, 31') umfasst,
wobei bevorzugt wird, dass das Ladeelement (30, 30') drei Ladespulen (31, 31') umfasst, wobei eine erste und eine zweite Ladespule (31, 31') angrenzend aneinander angeordnet sind und die dritte Ladespule (31, 31') so angeordnet ist, dass sie die erste und die zweite Ladespule (31, 31') überlappt.

11. Ladevorrichtung (1, 1') nach einem der vorstehenden Ansprüche, **gekennzeichnet durch** eine zweite Tasche zum Unterbringen einer Batterie für das Ladeelement (30, 30').

12. Ladevorrichtung (1') nach einem der vorstehenden Ansprüche, **dadurch gekennzeichnet, dass** das Ladeelement (30') in der von der hinteren Lage (10') und der vorderen Lage (20') gebildeten Tasche oder in einem von der hinteren Lage (10) und der vorderen Lage (20) gebildeten Abschnitt angeordnet ist.

13. Ladevorrichtung (1, 1') nach einem der vorstehenden Ansprüche, **dadurch gekennzeichnet, dass** das Ladeelement (30, 30') in einem Silikongehäuse (33, 33') angeordnet ist.

14. Tragbare Ware, insbesondere ein Kleidungsstück wie eine Jacke, ein Hemd, ein Mantel, eine Hose oder dergleichen, oder eine Tasche, vorzugsweise eine Handtasche, ein Rucksack, ein Koffer oder eine Aktentasche, umfassend eine Ladevorrichtung nach einem der vorstehenden Ansprüche.

## Revendications

1. Dispositif de charge (1, 1') pour une charge inductive d'un dispositif électronique, par exemple un téléphone mobile, en particulier un téléphone intelligent, une tablette électronique ou analogue, comprenant :
une couche arrière (10, 10'),
une couche avant (20, 20') reliée à la couche arrière (10, 10') de sorte à former une poche pour recevoir le dispositif électronique et
un élément de charge (30, 30') agencé pour charger le dispositif électronique agencé dans la poche, l'élément de charge (30, 30') étant configuré pour une charge inductive du dispositif électronique,
dans lequel la couche arrière (10, 10') et/ou la couche avant (20, 20') sont élastiquement déformables,
**caractérisé en ce que**
une couche de tissu en argent (35) est agencée sur un côté de l'élément de charge (30') à l'opposé de la couche arrière (10) ou
une couche de tissu en argent (35') est agencée entre l'élément de charge (30') et la couche arrière (10').

2. Dispositif de charge (1, 1') selon la revendication 1,
**caractérisé en ce que** la couche arrière (10, 10') et/ou la couche avant (20, 20') sont composées d'un matériau en tissu,
lequel matériau en tissu comprend, de préférence, des fibres synthétiques élastiques, en particulier 1-10 %, plus préférentiellement 2-5 % de fibres synthétiques élastiques,
et/ou dans lequel le matériau en tissu présente une construction, ou une composition, textile élastique, telle que des fils texturés ou une teneur en fibres élastiques.

3. Dispositif de charge (1, 1') selon l'une quelconque des revendications précédentes, **caractérisé en ce que** la couche avant (20, 20') est fixée à la couche arrière (10, 10') par un motif de surpiqûre (21, 21').

4. Dispositif de charge (1, 1') selon la revendication 3, **caractérisé en ce que** la couche avant (20, 20') est pourvue d'une bande de couture, dans lequel le motif de surpiqûre (21, 21') est disposé sur la bande de couture.

5. Dispositif de charge (1, 1') selon l'une quelconque des revendications précédentes, dans lequel la couche de tissu en argent (35, 35') est fixée à la couche arrière (10, 10') par couture.

6. Dispositif de charge (1, 1') selon la revendication 5, **caractérisé en ce que** l'élément de charge (30) est fixé à la couche de tissu en argent (35) par couture.

7. Dispositif de charge (1, 1') selon l'une quelconque des revendications précédentes, **caractérisé en ce que** la couche avant (20, 20') est composée d'un matériau transparent ou comprend une partie avant transparente.

8. Dispositif de charge (1, 1') selon l'une quelconque des revendications précédentes, **caractérisé en ce que** l'élément de charge comprend une carte de circuit imprimé (32, 32'), laquelle carte de circuit imprimé (32) est, de préférence, composée d'un matériau élastiquement déformable, en particulier de polyimide, ou laquelle carte de circuit imprimé (32, 32') est composée d'un matériau composite renforcé par des fibres.

9. Dispositif de charge (1, 1') selon l'une quelconque des revendications précédentes, **caractérisé en ce que** la couche avant comprend un écran, semblable à un écran à DEL.

10. Dispositif de charge (1, 1') selon l'une quelconque des revendications précédentes, **caractérisé en ce que** l'élément de charge (30, 30') comprend au moins une bobine de charge (31, 31'), de préférence deux, ou plus, bobines de charge (31, 31'),
dans lequel il est préféré que l'élément de charge (30, 30') comprenne trois bobines de charge (31, 31'), dans lequel une première et une deuxième bobine de charge (31, 31') sont agencées adjacentes l'une à l'autre et la troisième bobine de charge (31, 31') est agencée de sorte à chevaucher les première et deuxième bobines de charge (31, 31').

11. Dispositif de charge (1, 1') selon l'une quelconque des revendications précédentes, **caractérisé par** une seconde poche pour loger une batterie pour l'élément de charge (30, 30').

12. Dispositif de charge (1') selon l'une quelconque des revendications précédentes, **caractérisé en ce que** l'élément de charge (30') est agencé dans la poche formée par la couche arrière (10') et la couche avant (20') ou dans une partie par la couche arrière (10) et la couche avant (20).

13. Dispositif de charge (1, 1') selon l'une quelconque des revendications précédentes, **caractérisé en ce que** l'élément de charge (30, 30') est agencé dans un boîtier en silicone (33, 33').

14. Article portable, en particulier un article vestimentaire comme une veste, une chemise, une blouse, un pantalon, ou analogue, un sac, de préférence un sac à main, un sac à dos, une valise ou une mallette comprenant un dispositif de charge selon l'une quelconque des revendications précédentes.
